# EUROPÄISCHE PATENTANMELDUNG

(11) **EP 2 397 837 A2**
(43) Veröffentlichungstag der Anmeldung: **21.12.2011**
(21) Anmeldenummer: 11003900.5
(22) Anmeldetag: 12.05.2011
(51) Int. Cl.: G01N 21/21, G01N 21/55

(54) **Sensor zur berührungslosen Bestimmung der Fahrbahnbeschaffenheit und dessen Verwendung**

(30) Priorität: 15.06.2010 DE 102010023857; 30.03.2011 DE 102011015527
(71) Anmelder: WABCO GmbH, 30453 Hannover (DE)
(72) Erfinder: Breuer, Karsten, 31867 Lauenau (DE); Dieckmann, Thomas, 30982 Pattensen (DE); Gerami-Manesch, Bijan, 31303 Burgdorf (DE); Peuser, Axel, 30952 Ronnenberg (DE); Sandkühler, Dirk, 30926 Seelze (DE)

(57) **Zusammenfassung**

Die vorliegende Beschreibung bezieht sich auf einen Sensor (2) zur Oberflächendetektion einer Fahrbahn für ein Kraftfahrzeug. Der Sensor umfasst zumindest eine Lichtquelleneinheit (12), welche dazu ausgelegt ist, Licht in zumindest zwei voneinander verschiedenen Wellenlängen auszusenden, einen ersten Detektor (22) zur Ermittlung von diffus reflektiertem Licht der zumindest zwei voneinander verschiedenen Wellenlängen, wobei ein erster Polarisator (24) vor dem ersten Detektor (22) angeordnet ist, und einen zweiten Detektor (32) zur Ermittlung von reflektiertem Licht der zumindest zwei voneinander verschiedenen Wellenlängen,
wobei die zumindest eine Lichtquelle (12), der erste Detektor (22) und der zweite Detektor (32) in einem Gehäuse (4), unmittelbar nebeneinander angeordnet sind.

## Beschreibung

Die vorliegende Beschreibung bezieht sich auf Sensoren zur berührungslosen Bestimmung der Fahrbahnbeschaffenheit unter einem Kraftfahrzeug. Insbesondere bezieht sich die vorliegende Beschreibung auf optische Oberflächensensoren zur Erkennung unterschiedlicher Fahrbahnoberflächen wie Asphalt oder Beton, sowie zur Erkennung des Zustands derselben, insbesondere zur Erkennung trockener, nasser, vereister oder schneebedeckter Fahrbahnoberflächen.

Moderne Kraftfahrzeuge verfügen meist standardmäßig über Außentemperatursensoren mit einer entsprechenden Anzeige, um dem Fahrer einen Warnhinweis zu geben, wenn die Außentemperatur unter z.B. + 3°C sinkt. Damit soll der Fahrer vor dem Auftreten von möglicher Eisglätte oder winterlichen Straßenverhältnissen gewarnt werden. Solche Warnhinweise sind jedoch nur allgemeiner Natur und sind unabhängig vom tatsächlichen Fahrbahnzustand, so dass sie vom Fahrer, wenn überhaupt, nur als Randinformation wahrgenommen werden. In der Praxis werden solche Temperaturhinweise häufig ignoriert.

Um Informationen über die sich tatsächlich unter dem Kraftfahrzeug befindende Fahrbahnoberfläche zu erhalten, sind lichtbasierte optische Oberflächensensoren oder mechanische oder akustische Sensoren bekannt.

Die im Stand der Technik bekannten optischen Oberflächensensoren beruhen im Wesentlichen auf zwei Grundprinzipien. Einerseits sind Oberflächensensoren bekannt, welche Licht auf die Fahrbahn aussenden und das diffus reflektierte sowie das an der Fahrbahnoberfläche spiegelnd reflektierte Licht messen. Solche Sensoren basieren auf dem Effekt, dass der Anteil des diffus reflektierten Lichtes mit zunehmender Helligkeit der Fahrbahnoberfläche zunimmt. Somit lassen sich helle, wie beispielsweise schneebedeckte Fahrbahnen von dunklem Asphalt unterscheiden. Wasser und Eis lassen sich mit einem Reflexionsdetektor erkennen, da das auftreffende Licht hier spiegelnd reflektiert wird. Solche Sensoren können mit sichtbarem Licht betrieben werden, haben jedoch den Nachteil, dass die Unterscheidung von Eis und Wasser auf der Fahrbahnoberfläche anhand des reflektierten Lichts nicht zuverlässig möglich ist. Solche Sensoren sind beispielsweise aus der DE 36 21 567 A1 bekannt.

Es sind auch so genannte spektrale Oberflächensensoren bekannt, welche den Effekt ausnutzen, dass unterschiedliche Wellenlängen im Infrarotbereich von Wasser und Eis unterschiedlich absorbiert werden. Ein Vergleich der reflektierten Lichtintensitäten verschiedener Wellenlängen lässt dann auf eine trockene, nasse, oder eisige Fahrbahn schließen. Solche spektrale Infrarotsensoren sind beispielsweise aus der US 4,274,091 oder der DE 197 36 138 bekannt.

Um Oberflächensensoren zu implementieren, sind im Stand der Technik verschiedene Lösungen vorgeschlagen.

Aus der DE 10 2005 007 918 A1 ist eine Straßenzustandserkennungsvorrichtung bekannt, welche über zwei Lichtquellen verfügt, zwischen denen zwei Lichtsensoren angeordnet sind, wobei jeweils ein Sensor einer Lichtquelle zugeordnet ist.

Aus der US 5,318,143 ist ein Spursensor bekannt, bei dem beidseitig eines Lichtransmitters jeweils identische Lichtsensoren als separate Bauelemente angeordnet sind. Die beiden Lichtsensoren sind auf unterschiedliche Bereiche auf der Fahrbahn gerichtet, um bestimmen zu können, ob eine Fahrbahnmarkierung linksseitig oder rechtsseitig befindlich ist.

Aus der US 2004/0011120 A1 ist ein Fahrbahnsensor bekannt, welcher aus eine Vielzahl von baugleichen Lichtsender/Empfängerpaaren besteht, wobei jeweils ein Lichtsender/Empfängerpaar in einem Gehäuse angeordnet ist.

Die vorliegende Erfindung hat daher zur Aufgabe, einen platzsparenden Oberflächensensor mit hoher Erkennungsgüte bereitzustellen, der sowohl Art als auch Zustand einer Fahrbahnoberfläche detektiert.

### Zusammenfassung der Erfindung

Die Aufgabe wird gelöst durch einen Sensor zur Ermittlung einer Beschaffenheit einer Fahrbahn, insbesondere der Oberfläche einer Fahrbahn für ein Kraftfahrzeug gemäß Anspruch 1. Die Beschaffenheit der Fahrbahn kann ein Zustand der Fahrbahnoberfläche, wie nass, trocken, vereist oder schneebedeckt oder eine Kombination daraus umfassen. Die Beschaffenheit der Fahrbahn kann auch die Art der Fahrbahn oder Information über eine Rauhigkeit der Fahrbahn oder Fahrbahnoberfläche, wie Asphalt, Beton, Split oder Schotter oder eine Kombination daraus umfassen.

Der Sensor umfasst zumindest eine Lichtquelleneinheit, welche dazu ausgelegt ist, Licht in zumindest zwei voneinander verschiedenen Wellenlängen auszusenden, einen ersten Detektor zum Erfassen von diffus reflektiertem Licht der zumindest zwei voneinander verschiedenen Wellenlängen, und einen zweiten Detektor zum Erfassen von reflektiertem Licht der zumindest zwei voneinander verschiedenen Wellenlängen. Das an dem zweiten Detektor erfasste reflektierte Licht kann spiegelnd reflektiertes Licht und diffus reflektiertes Licht umfassen. Es sind zumindest zwei Polarisatoren vorgesehen, wobei ein erster Polarisator mit einer ersten Polarisationsrichtung dem ersten Detektor zugeordnet ist. Der Lichtquelleneinheit ist ein Lichtquellenpolarisator und/oder dem zweiten Detektor ist ein zweiter Polarisator zugeordnet, dessen Polarisationsrichtung(en) im Wesentlichen senkrecht zu der ersten Polarisationsrichtung des ersten Polarisators ausgerichtet ist/sind. Die zumindest eine Lichtquelleneinheit, der erste Detektor und der zweite Detektor sind in einem Gehäuse unmittelbar nebeneinander angeordnet. Das Gehäuse kann ein gemeinsames, einziges und/oder einstückiges Gehäuse sein, welches insbesondere auch einen oder mehrere der vorgenannten Polarisatoren enthalten kann.

Die Anordnung des ersten Detektors und des zweiten Detektors in unmittelbarer Nähe der Lichtquelleneinheit hat zur Folge, dass der von der Lichtquelleneinheit ausgesandte Lichtstrahl und das zurückfallende spiegelnd und diffus reflektierte Licht ungefähr den gleichen Lichtweg, jedoch in entgegen gesetzter Richtung durchlaufen. Das Licht wird somit im Winkel von annähernd 180° reflektiert, z.B. in einem Winkel im Bereich von ungefähr 170° bis 190°. Mit dieser Bauweise kann der Sensor sehr kompakt und platzsparend aufgebaut werden. Ferner sind alle wesentlichen Bauteile in einem einzigen Gehäuse integriert, was einen einfachen und damit kostengünstigen und kompakten Einbau im Fahrzeug erlaubt.

Die Anordnung des ersten Detektors und des zweiten Detektors in unmittelbarer Nähe der Lichtquelleneinheit kann bedeuten, dass der Abstand der optischen Achse der Lichtquelleneinheit zu der ersten optischen Achse des ersten Detektors und/oder zu der zweiten optischen Achse des zweiten Detektors im Bereich von einigen cm liegt, beispielweise 10 cm oder weniger, insbesondere 5 cm oder weniger. Der Abstand der optischen Achse der Lichtquelleneinheit zu der ersten optischen Achse des ersten Detektors und/oder zu der zweiten optischen Achse des zweiten Detektors ist im Wesentlichen bestimmt durch die Dimensionen eventuell vorhandener Optik, insbesondere einer vor der Lichtquelleneinheit angeordneten Lichtquellenoptik, einer vor dem ersten Detektor angeordneten ersten Sammeloptik und/oder einer vor dem zweiten Detektor angeordneten zweiten Sammeloptik. Die Optiken der Lichtquelleneinheit und des ersten und zweiten Detektors können eine oder auch eine Anordnung mehrerer Linsen besitzen. Der Abstand der optischen Achse der Lichtquelleneinheit zu der ersten optischen Achse kann im Bereich von ungefähr der Summe der Radien der Lichtquellenoptik und der ersten Sammeloptik bis ungefähr der Summe der Durchmesser der Lichtquellenoptik und der ersten Sammeloptik gewählt werden. Der Abstand der optischen Achse der Lichtquelleneinheit zu der zweiten optischen Achse kann im Bereich von ungefähr der Summe der Radien der Lichtquellenoptik und der zweiten Sammeloptik bis ungefähr der Summe der Durchmesser der Lichtquellenoptik und der zweiten Sammeloptik gewählt werden.

Die optische Achse der Lichtquelleneinheit bzw. die Emitterachse kann die optische Achse einer vor der Lichtquelleneinheit angeordneten Emitteroptik sein oder durch diese definiert werden. Es ist nicht notwendig, dass die eine oder mehreren Lichtquellen der Lichtquelleneinheit auf dieser Emitterachse angeordnet sind. Vielmehr können mehrere Lichtquellen zur Aussendung von Licht verschiedener Wellenlängen nebeneinander in der Nähe oder um die optische Achse der Lichtquelleneinheit herum in der Lichtquelleneinheit angeordnet sein.

Die Lichtquelleneinheit kann insbesondere zwischen dem ersten Detektor und dem zweiten Detektor angeordnet sein, so dass ein für beide Detektoren im Wesentlichen gleicher Reflektionswinkel erreicht werden kann, welcher möglichst nahe 180° ist, insbesondere in einem Winkel im Bereich von ungefähr 170° bis 190°.

Erfindungsgemäß sind zumindest zwei Polarisatoren bzw. Polarisationsfilter vorgesehen, von denen ein erster Polarisator vor dem ersten Detektor angeordnet ist, welcher nur Lichtwellen in der ersten Polarisationsrichtung zu dem ersten Detektor durchlässt. Ist ein Lichtquellenpolarisator an der Lichtquelleneinheit vorgesehen, ist dessen Polarisationsrichtung im Wesentlichen senkrecht zu der ersten Polarisationsrichtung des ersten Polarisators angeordnet, und das von dem Sensor ausgesandte Licht ist in einer Richtung im Wesentlichen senkrecht zu der ersten Polarisationsrichtung polarisiert, so dass an dem ersten Detektor polarisiertes, spiegelnd reflektiertes Licht herausgefiltert und nur diffus reflektiertes Licht detektiert wird. Ein ähnlicher Effekt kann erreicht werden, wenn ein zweiter Polarisator vor dem zweiten Detektor angeordnet ist, dessen Polarisationsrichtung im Wesentlichen senkrecht zu der ersten Polarisationsrichtung ausgerichtet ist. Der zweite Polarisator kann alternativ oder zusätzlich zu dem Lichtquellenpolarisator verwendet werden. Es kann auch vorgesehen sein, in der Lichtquelleneinheit bereits polarisiertes Licht zu erzeugen.

Die Verwendung mindestens zweier voneinander verschiedener Wellenlängen erlaubt es, den Sensor in spektraler Weise zu betreiben. Durch die Verwendung von Wellenlängen, welche z.B. von Eis oder Wasser besonders gut absorbiert werden, können Eis bzw. Wasser auf der Fahrbahn bzw. Fahrbahnoberfläche erkannt werden, wenn das reflektierte Licht der vom Wasser bzw. Eis absorbierten Wellenlänge mit dem einer Referenzwellenlänge verglichen wird. Es ist somit möglich, die Prinzipien der Spektralanalyse und der Diffus- und Spiegelndreflexion in nur einem Gerät, bzw. einem einzigen Gehäuse auszuführen. Dafür sind alle Lichtquellen und alle dafür erforderlichen Detektoren platzsparend in einem Gehäuse untergebracht, was auch die Montage und Wartung vereinfacht. Die Anordnung von der Lichtquelleneinheit, dem ersten Detektor, dem zweitem Detektor und gegebenenfalls weiteren Detektoren kann in verschiedenen geometrischen Anordnungen erfolgen. Z.B. kann die Anordnung länglich erfolgen, wobei die eine oder auch mehrere Lichtquelleneinheiten und die Detektoren in einer Reihe angeordnet sind, wobei auch mehrere Reihen nebeneinander gebildet werden können. Die Anordnung kann auch kreuzförmig erfolgen, wobei die Lichtquelleneinheit mittig angeordnet ist, und der erste Detektor, der zweite Detektor, ein dritter Detektor und ggf. ein vierter Detektor kreuzförmig um die Lichtquelleneinheit angeordnet sind. Die Anordnung kann auch derart erfolgen, dass der erste Detektor, der zweite Detektor und die Lichtquelleneinheit an jeweils einer Ecke eines Dreieckes, z. B eines gleichseitigen Dreieckes, angeordnet sind. Eine längliche Anordnung kann besonders vorteilhaft sein, wenn eine Ausrichtung z. B. bezüglich der Fahrtrichtung gewünscht ist. Eine generell symmetrische Anordnung ist bei der Montage einfacher zu handhaben, da keine vorbestimmte Ausrichtung zu berücksichtigen ist und eine höhere Montagedichte erzielt werden kann.

Es kann Licht in zumindest drei voneinander verschiedenen Wellenlängen im Infrarotbereich verwendet werden. Die Lichtquelleneinheit kann dazu mehrere Lichtquellen umfassen. Z.B. kann die Lichtquelleneinheit dazu ausgelegt sein, Infrarotlicht der Wellenlängen 1300 nm, 1460 nm und 1550 nm auszusenden. Während Licht der Wellenlänge 1460 nm besonders gut von Wasser absorbiert wird, wird Licht der Wellenlänge 1550 nm gut von Eis absorbiert. Licht im Bereich von ungefähr 1300 nm kann dann als Referenzwellenlänge verwendet werden. Es können jedoch auch andere Wellenlängen verwendet werden. Insbesondere für die Referenzwellenlänge kann jede andere Wellenlänge verwendet werden, welche weder von Eis noch Wasser nennenswert absorbiert wird. Als wassersensitive Wellenlänge kann auch jede andere Wellenlänge verwendet werden, welche in Wasser erhöht absorbiert wird. Genauso kann als eissensitive Wellenlänge jede Wellenlänge gewählt werden, welche in Eis erhöht absorbiert wird. Andere interessante Wellenlängen umfassen z.B. 1190, 1040, 970, 880 und 810 nm im Infrarotbereich, sowie die sichtbaren Wellenlängen 625, 530 und 470 nm.

Die Lichtquelleneinheit kann dazu ausgelegt sein, Licht genau drei verschiedener Wellenlängen auszusenden. Dazu kann die Lichtquelleneinheit drei Lichtquellen, eine Lichtquelle für jede Wellenlänge aufweisen. Es werden nur die drei Wellenlängen verwendet, um sowohl spektral als auch spiegelnd/diffus reflektiertes Licht zu erfassen, um sowohl die Fahrbahnbeschaffenheit als auch die Art der Fahrbahn zu ermitteln bzw. zu erkennen. Jede der Lichtquellen kann einzeln ansteuerbar und unabhängig von den anderen an- und abschaltbar sein bzw. in der Intensität regulierbar sein.

Darüber hinaus können auch mehr als die oben genannten zwei oder drei voneinander verschiedenen Wellenlängen verwendet werden. Beispielsweise kann die Wellenlänge 625 nm auch zur Messung des diffus und spiegelnd reflektierten Lichts verwendet werden.

Es kann weiterhin vorgesehen sein, das ausgesendete Licht in der Intensität bzw. Amplitude zu modulieren. Das Modulieren der Intensität oder Amplitude kann durch An- und Ausschalten aller oder einzelner Lichtquellen der Lichtquelleneinheit erfolgen. Das Modulieren der Intensität bzw. das An- und Abschalten kann für jede Wellenlänge der Lichtquelleneinheit oder für jede Lichtquelle der Lichtquelleneinheit separat erfolgen. Beispielsweise kann das Modulieren der Amplitude oder Intensität bzw. das An- und Abschalten für jede Wellenlänge mit der gleichen Frequenz, jedoch phasenverschoben und/oder mit unterschiedlichen Frequenzen erfolgen. Dadurch kann beispielsweise erreicht werden, dass das Licht unterschiedlicher Wellenlängen zeitlich versetzt oder sequentiell ausgesandt wird. Z.B. kann vorgesehen sein, Licht einer ersten Wellenlänge für ein bestimmtes Zeitintervall auszusenden, dann das Licht der ersten Wellenlänge abzuschalten und eine zweite Wellenlänge einzuschalten usw.. In den Detektoren wird dann jeweils Licht von nur einer Wellelänge detektiert. Dadurch kann eine spektrale Analyse oder Aufspaltung des einfallenden Lichts an den Detektoren vermieden werden. Es sind auch Mischformen verschiedener Modulationstechniken anwendbar, insbesondere frequenz- und amplitudenmodulierte optische Signalzüge mit oder ohne Unterbrechungen.

Die vorliegende Erfindung erlaubt es daher auch, einfache Detektoren als ersten oder zweiten Detektor zu verwenden. Beispielsweise können Photodioden verwendet werden. Der erste Detektor und der zweite Detektor können jeweils eine oder mehrere Photodioden umfassen. Zumindest der erste Detektor kann dazu ausgelegt sein, Licht aller von der Lichtquelleneinheit ausgesendeten Wellenlängen zu erfassen. Der Detektor kann auch alternativ oder ergänzend einen optoelektronischen Chip (z.B. CCD) oder eine andere optische Aufnahmeeinrichtung umfassen.

Der erste und der zweite Detektor können zur Erfassung bzw. zur Ermittlung von spiegelnd reflektiertem und diffus reflektiertem Licht verwendet werden. Zudem kann zumindest einer aus dem ersten und dem zweiten Detektor auch für die spektrale Ermittlung verwendet werden. Zumindest dieser Detektor ist dann dazu ausgelegt, Licht mehrerer Wellenlängen zu detektieren. In diesem Beispiel verfügt der Sensor über genau den ersten Detektor und den zweiten Detektor und es sind keine weiteren Detektoren vorgesehen.

Der Sensor kann dazu ausgelegt sein, in einem Abstand von 10 cm bis 100 cm von einer Fahrbahnoberfläche an einem Fahrzeug oder stationär angeordnet zu werden. Insbesondere kann eine der Lichtquelleneinheit zugeordnete Emitteroptik, eine dem ersten Detektor zugeordnete erste Sammeloptik und eine dem zweiten Detektor zugeordnete zweite Sammeloptik so ausgelegt sein, dass an einer sich im Abstand von 10 cm bis 100 cm von dem Sensor befindenden Fahrbahnoberfläche diffus und spiegelnd reflektiertes Licht in dem ersten Detektor und dem zweiten Detektor detektiert wird. Durch den breiten Abstandbereich kann der Sensor leicht an unterschiedlichen Fahrzeugen angebracht werden. Die Anbringung ist somit auch in der Nachrüstung einfach und unkompliziert.

Der Sensor kann auch eine Auswerteinrichtung zur Auswertung bzw. Verarbeitung von mittels des ersten Detektors und zumindest mittels des zweiten Detektors ermittelten Daten umfassen. Die Auswerteinrichtung kann innerhalb des Gehäuses angeordnet sein oder in das Gehäuse integriert sein. Dadurch ergibt sich eine besonders kompakte Ausführung und eine einfache Montage des Sensors. Die Auswerteinrichtung kann jedoch auch als separates Element außerhalb des Sensors vorgesehen sein und mit dem Sensor beispielsweise über eine Kabelverbindung oder eine drahtlose Verbindung verbunden sein.

Die Auswerteinrichtung kann auch eine Steuereinrichtung für die Lichtquellen der Lichtquelleneinheit umfassen.

### Figurenbeschreibung

Im Folgenden werden weitere Einzelheiten und Beispiele der Erfindung lediglich beispielhaft und nicht einschränkend mit Bezug auf die beiliegenden Figuren angegeben, welche zeigen:
Figur 1 ein erstes Beispiel eines erfindungsgemäßen Fahrbahnsensors;
Figur 2 ein zweites Beispiel eines erfindungsgemäßen Fahrbahnsensors;
Figuren 3a und b Sensoren von unten;
Figur 4 wie ein Sensor in einem Fahrzeug angeordnet werden kann, und
Figur 5 das Fahrzeug mit dem Sensor der Figur 4 in der Seitenansicht.

### Detaillierte Beschreibung der Erfindung

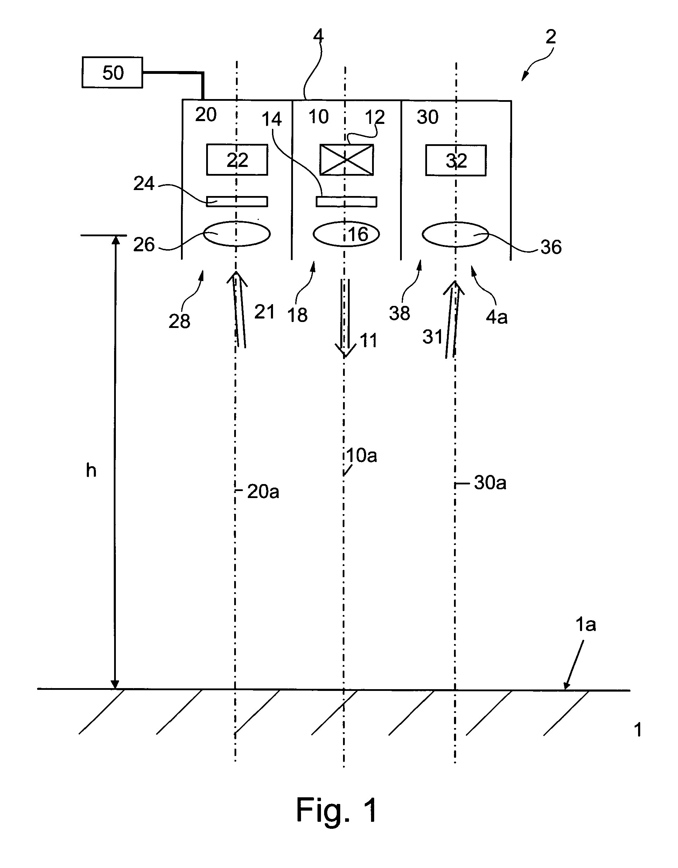

Figur 1 zeigt schematisch und beispielhaft den Aufbau eines ersten Beispiels eines Sensors 2 zur Erkennung der Beschaffenheit, insbesondere eines Zustands und der Art der Oberfläche einer Fahrbahn 1 bzw. Fahrbahnoberfläche 1a. Der Sensor 2 ist dazu ausgelegt, an einem Kraftfahrzeug 60 angebracht zu werden.

Der Sensor 2 umfasst in einem Gehäuse 4 drei Abschnitte, einen Lichtemitterabschnitt 10, einen ersten Detektorabschnitt 20 und einen zweiten Detektorabschnitt 30. Der Lichtemitterabschnitt 10 weist ein Lichtemitterfenster oder eine Lichtemitteröffnung 18 in dem Gehäuse 4 auf, der erste Detektorabschnitt 20 weist ein erstes Detektorfenster oder eine erste Detektoröffnung 28 in dem Gehäuse 4 auf und der zweite Detektorabschnitt 30 weist ein zweites Detektorfenster oder eine zweite Detektoröffnung 38 in dem Gehäuse 4 auf. Die Lichtemitteröffnung 18, die erste Detektoröffnung 28 und die zweite Detektoröffnung 38 sind an der gleichen Seite 4a des Gehäuses 4 angeordnet und zu der Fahrbahn 1 hin ausgerichtet, wenn der Sensor 2 betriebsbereit an einem Fahrzeug montiert ist. Der Sensor 2 ist so ausgerichtet, dass der ausgesendete Lichtstrahl 11 ungefähr senkrecht auf die Fahrbahn 1 bzw. Fahrbahnoberfläche 1a fällt, d.h. die optische Achse des Lichtemitterabschnitts 10a steht im Wesentlichen senkrecht zu der Fahrbahn 1 bzw. Fahrbahnoberfläche 1a.
In dem in der Figur 1 dargestellten Beispiel sind der Lichtemitterabschnitt 10, der erste Detektorabschnitt 20 und der zweiten Detektorabschnitt 30 in einer Reihe angeordnet und der Lichtemitterabschnitt 10 ist zwischen dem ersten Detektorabschnitt 20 und dem zweiten Detektorabschnitt 30 angeordnet .

In dem Lichtemitterabschnitt 10 ist eine Lichtquelleneinheit 12 angeordnet, welche zur Aussendung von Licht mehrerer unterschiedlicher Wellenlängen ausgelegt ist. Die Lichtquelleneinheit 12 kann dazu eine oder mehrere Leuchtdioden (LEDs), Laserdioden, eine andere geeignete Lichtquelle oder eine Kombination daraus umfassen und ist dazu geeignet, Licht mehrerer voneinander verschiedener Wellenlängen auszusenden. Beispielsweise kann die Lichtquelleneinheit 12 Licht zumindest mit den Wellenlängen 1300 nm, 1460 nm und 1550 nm aussenden. Die vorgesehenen Wellenlängen können jedoch dem jeweiligen Einsatzzweck angepasst werden.

Der Lichtquelleneinheit 12 ist im in der Figur 1 dargestellten Beispiel in Richtung des ausgesandten Lichtstrahls 11 ein Lichtquellenpolarisator oder Lichtquellenpolarisationsfilter 14 nachgeschaltet, welcher das von der Lichtquelleneinheit 12 ausgesandte Licht in eine vorbestimmte Richtung polarisiert.

Ferner ist eine Emitteroptik 16 vorgesehen, um das ausgesendete Licht entlang eines emittierten Lichtstrahls 11 auf einen bestimmten Bereich auf dem Untergrund oder der Fahrbahn 1 bzw. der Fahrbahnoberfläche 1a unter dem Fahrzeug auszurichten bzw. zu fokussieren. Die optische Achse der Emitteroptik 16 kann die optische Achse 10a des Lichtemitterabschnitts 10 definieren. Die Emitteroptik 16 kann aus einer Emitterlinse bestehen oder mehrere Linsen und/oder andere optische Element umfassen.

Der erste Detektorabschnitt 20 umfasst einen ersten Detektor 22, beispielsweise eine oder mehrere Photodioden, dazu ausgelegt, Licht aller von der Lichtquelleneinheit 10 ausgesandten Wellenlängen zu detektieren. Der erste Detektor 22 kann dazu auch mehrere nebeneinander angeordnete Photodioden oder einen oder mehrere optoelektronische Einheiten (z.B. CCD, CMOS) umfassen.

An dem ersten Detektor 22 ist eine erste Sammeloptik 26und ein erster Polarisator oder erster Polarisationsfilter 24 angeordnet. Die erste Sammeloptik 26 kann aus einer einzelnen ersten Sammellinse bestehen oder mehrere Linsen und/oder weitere optische Elemente umfassen. Die Polarisierungsrichtung des ersten Polarisationsfilters 24 ist senkrecht zu der des Lichtquellenpolarisationsfilters 14 und damit im Wesentlichen senkrecht zu der vorbestimmten Polarisierungsrichtung. Spiegelnd reflektiertes, in der vorbestimmten Richtung polarisiertes Licht wird damit herausgefiltert und lediglich diffus reflektiertes Licht gelangt zu dem ersten Detektor 22. Der erste Detektor 22 dient somit als "Streuungsdetektor".

Eine erste Achse 20a kann im Wesentlichen der optischen Achse der ersten Sammeloptik 26 und/oder des ersten Detektorabschnitts 20 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

In dem zweiten Detektorabschnitt 30, welcher auf der dem ersten Detektorabschnitt 20 gegenüberliegenden Seite des Lichtemitterabschnitts 10 in dem Gehäuse 4 des Sensors 2 angeordnet ist, ist ein zweiter Detektor 32 angeordnet.

Der zweite Detektor 32 kann ebenfalls eine Photodiode umfassen, welche dazu ausgelegt ist, zumindest Licht einer von der Lichtquelleneinheit 12 ausgesandten Wellenlängen zu detektieren. Der zweite Detektor 32 kann jedoch ebenfalls mehrere nebeneinander angeordnete Photodioden umfassen und dazu ausgelegt sein, Licht mehrerer verschiedener Wellenlängen oder Wellenlängenbereiche zu detektieren.

Vor dem zweiten Detektor 32 ist eine zweite Sammeloptik 36 angeordnet, um das reflektierte Licht auf den zweiten Detektor 32 zu fokussieren und in diesem zu detektieren. Die zweite Sammeloptik 36 kann aus einer einzelnen zweiten Sammellinse bestehen oder mehrere Linsen und/oder weitere optische Elemente umfassen. Im Gegensatz zu dem ersten Detektor 22, weist der zweite Detektor 32 im in der Figur 1 dargestellten Beispiel keinen Polarisator oder Polarisationsfilter auf. Da bereits das emittierte Licht polarisiert ist, ist dies auch nicht notwendig. Von dem zweiten Detektor wird somit diffus reflektiertes und spiegelnd reflektiertes Licht detektiert, welches entlang des zweiten Detektorstrahlengangs 31 reflektiert wird. Jedoch kann auch der zweite Detektor 32 einen Polarisationsfilter (nicht dargestellt) aufweisen, dessen Polarisationsrichtung parallel zu derjenigen des Emitterpolarisators 16 ist, um lediglich spiegelnd reflektiertes Licht in der zweiten Photodiode 36 zu detektieren.

Eine zweite Achse 30a kann im Wesentlichen der optischen Achse der zweiten Sammeloptik 36 und oder des zweiten Detektorabschnitts 30 entsprechen und im Wesentlichen parallel zu der Emitterachse 10a, welche im Wesentlichen der optischen Achse der Emitteroptik 16 und/oder des Lichtemitterabschnitts 10 entspricht, ausgerichtet sein.

Der beschriebene Sensor kann im sichtbaren Lichtbereich, beispielsweise bei einer Wellenlänge von ungefähr 625 nm betrieben werden, um spiegelnd reflektiertes Licht und diffus reflektiertes Licht zu messen. Aus dem Verhältnis von dem im ersten Detektor 22 gemessenen diffus reflektierten Licht zu dem im zweiten Detektor 32 zusätzlich gemessenen spiegelnd reflektierten Licht kann auf die Fahrbahnhelligkeit und Fahrbahnrauhigkeit geschlossen werden und damit bestimmt werden, ob sich das Fahrzeug beispielsweise auf einer Asphalt- oder Betonfahrbahn befindet.

Der beschriebene Sensor kann auch im Infrarotbereich bei verschiedenen Wellenlängen verwendet werden. Hierzu kann der erste Detektor 22 und/oder der zweite Detektor 32 verwendet werden. Beispielsweise wird Infrarotlicht der Wellenlänge 1460 nm besonders gut von Wasser absorbiert, so dass Licht dieser Wellenlänge bei nasser Fahrbahn nur in geringem Maße zu dem ersten Detektor 22 bzw. dem zweiten Detektor 32 zurückreflektiert wird. Bei trockener Fahrbahn wird diese Wellenlänge dahingegen normal reflektiert. Infrarotlicht der Wellenlänge 1550 nm wird dahingegen gut von Eis absorbiert. Durch Vergleich der Reflexion dieser beiden Wellenlängen und Berücksichtigung einer Referenzwellenlänge kann auf Eis oder Wasser auf der Fahrbahn geschlossen werden. Die Referenzwellenlänge, welche weder von Eis noch von Wasser nennenswert absorbiert wird, z.B. 1300 nm, dient als Bezugsgröße zur Bewertung des Absorptionsgrades der beiden anderen Wellenlängen. Dann können die gemessenen Intensitätsverhältnisse bei den Wellenlängen 1550 nm/1300 nm mit dem Verhältnis 1460 nm/1300 nm in bekannter Weise in Relation gesetzt werden, um Informationen über Wasser und Eis auf der Fahrbahn oder eine trockene Fahrbahn zu erlangen.

Die verschiedenen Wellenlängen können parallel, insbesondere aber sequentiell zeitlich versetzt, ausgesandt werden. Somit wird jeweils nur Licht einer Wellenlänge zu einem Zeitpunkt ausgesandt und dementsprechend detektiert. Dies erlaubt es, auf eine aufwändige spektrale Analyse oder Strahlaufteilung zu verzichten.

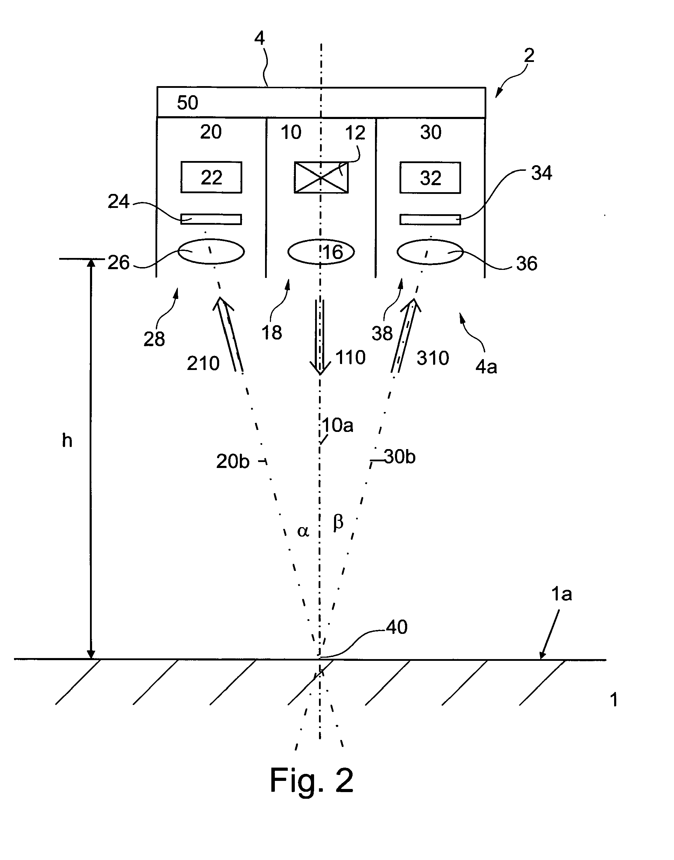

Der Sensor 2 verfügt ferner über eine Auswerteinrichtung 50, mit welcher die von dem ersten Detektor 22 und dem zweiten Detektor 32 erfassten bzw. ermittelten Daten verarbeitet werden. Die Auswerteinrichtung 50 kann außerhalb des Gehäuses 4 angeordnet sein und sich beispielsweise an einem anderen Ort in dem Fahrzeug 60 befinden. Die Auswerteinrichtung 50 kann mit dem ersten Detektor 22 und dem zweiten Detektor 32 über ein Kabel oder eine drahtlose Verbindung verbunden sein. Die Auswerteinrichtung kann auch eine Steuerung für die Lichtquelleneinheit 21 umfassen oder mit einer Steuerung verbunden sein. Die Auswerteinheit 50 und/oder die Steuerung können jedoch auch an oder in dem Gehäuse 4 angeordnet sein bzw. in diese integriert sein, wie mit Bezug auf die Figur 2 dargestellt.

Mit dem beschriebenen Sensor 2 können mit einem kompakten und kostengünstigen Aufbau sowohl spektrale Reflexion, als auch spiegelnde und diffuse Reflexion in kurzer zeitlicher Abfolge gemessen und auf dieser Basis auf Fahrbahnart und - zustand geschlossen werden. Dadurch entsteht eine bessere und genauere Information über die Art und den tatsächlichen Zustand der Fahrbahn 1 bzw. Fahrbahnoberfläche 1a unter dem Fahrzeug 60. Für die Messung ist nur der eine Sensor 2 erforderlich.

Die Figur 2 zeigt ein weiteres Beispiel für einen Sensor 2. Dieser Sensor entspricht dem mit Bezug auf die Figur 1 beschriebenen Sensor mit dem Unterschied, dass kein Lichtquellenpolarisator vorgesehen ist. Der ausgesandte Lichtstrahl 110 ist in diesem Fall nicht polarisiert. Um dennoch spiegelnd reflektiertes Licht herausfiltern zu können, ist ein zweiter Polarisationsfilter 34 im Strahlengang vor dem zweiten Detektor 32 angeordnet. Die Polarisationsrichtung des zweiten Polarisationsfilters 34 ist im Wesentlichen senkrecht zu der Polarisationsrichtung des ersten Polarisationsfilters 24. Alle übrigen Elemente des Sensors 2 können denen des mit Bezug auf die Figur 1 dargestellten Sensors entsprechen.

Im in der Figur 2 dargestellten Beispiel ist die erste Achse 20b, welche der optischen Achse der ersten Sammeloptik 26 und/oder des gesamten ersten Detektorabschnitts 20 entsprechen kann, in einem Winkel α zur Emitterachse 10a ausgerichtet, wobei der Winkel α maximal ungefähr 10° beträgt. Entsprechend kann die zweite Achse 30b, welche der optischen Achse der zweiten Sammeloptik 36 und/oder des gesamten zweiten Detektorabschnitts 30 entsprechen kann, in einem Winkel β zur Emitterachse 10a ausgerichtet sein, wobei der Winkel β ebenfalls maximal ungefähr 10° beträgt. Der Schnittpunkt 40 der Emitterachse 10a mit der ersten Achse 20b und/oder der zweiten Achse 30b kann auf der Fahrbahnoberfläche 1a liegen oder in einem Abstand von bis zu 50cm von der Fahrbahnoberfläche 1a liegen.

Es besteht ferner die Möglichkeit, sowohl einen Lichtquellenpolarisator oder Lichtquellenpolarisationsfilter 14 an der Lichtquelleneinheit 12 vorzusehen, wie mit Bezug auf die Figur 1 beschrieben, als auch einen zweiten Polarisator oder zweiten Polarisationsfilter 34 vor dem zweiten Detektor 32. Typischerweise sind dann die Polarisationsrichtungen des Lichtquellenpolarisationsfilters 14 und des zweiten Polarisationsfilters 34 parallel zueinander ausgerichtet. Die Polarisationsrichtungen des Lichtquellenpolarisationsfilters 14 und des zweiten Polarisationsfilters 34 des zweiten Detektors 32 sind jedoch im Wesentlichen senkrecht zu der Polarisationsrichtung des ersten Polarisators oder ersten Polarisationsfilters 24 angeordnet.

In der Figur 2 ist ferner die Auswerteinrichtung 50 innerhalb des Gehäuses 4 des Sensors 2 angeordnet bzw. in das Gehäuse 2 integriert dargestellt. Es versteht sich, dass die Auswerteinheit auch, wie in Figur 1 dargestellt, außerhalb des Sensors 2 vorgesehen sein kann.

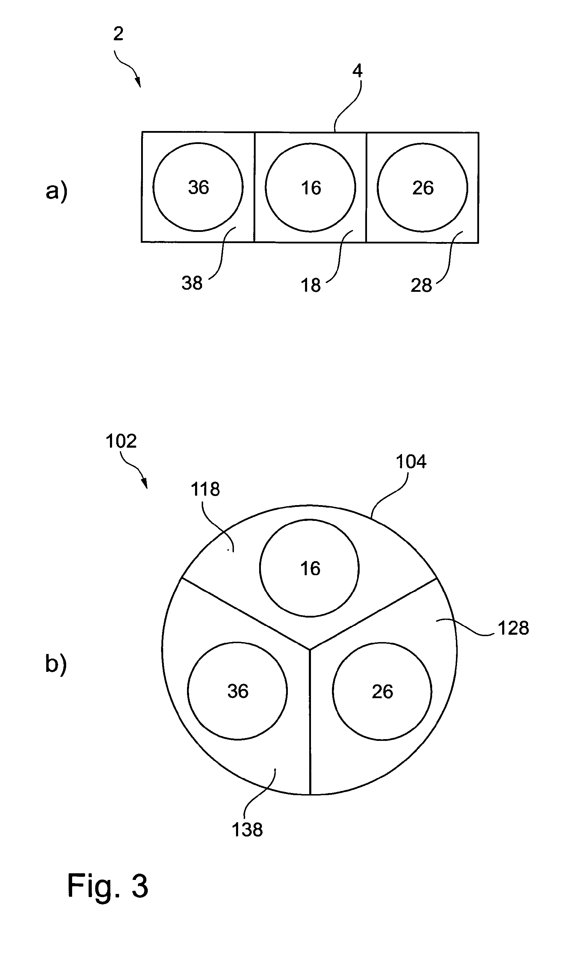

Die Figur 3a zeigt die der im normalen Betrieb der Fahrbahn 1 zugewandte Seite 4a des mit Bezug auf die Figuren 1 oder 2 beschriebenen Sensors 2. In der Seite 4a des Gehäuses 4 sind die Lichtemitteröffnung 18 mit der Emitteroptik 16, die erste Detektoröffnung 28 mit der ersten Sammeloptik 26 und die zweite Detektoröffnung 38 mit der zweiten Sammeloptik 28 nebeneinander angeordnet.

Die Figur 3b zeigt ein weiteres Beispiel einer Ansicht eines Sensors 102 mit einem zylindrischen Gehäuse 104 von der im normalen Betrieb der Fahrbahn 1 zugewandten Seite. Das zylindrische Gehäuse 104 hat am unteren Ende eine kreisförmige Öffnung, welche in drei Abschnitte unterteilt ist, so dass eine Lichtemitteröffnung 118, eine erste Detektoröffnung 128 und eine zweite Detektoröffnung 138 ausgebildet werden. In der Lichtemitteröffnung 118 ist eine Emitteroptik 16, in der ersten Detektoröffnung 128 ist eine erste Sammeloptik 26 und in der zweiten Detektoröffnung 138 ist eine zweite Sammeloptik 36 angeordnet. Die weiteren Elemente des Sensors 102 können den oben mit Bezug auf die Figuren 1 bis 3a beschriebenen entsprechen.

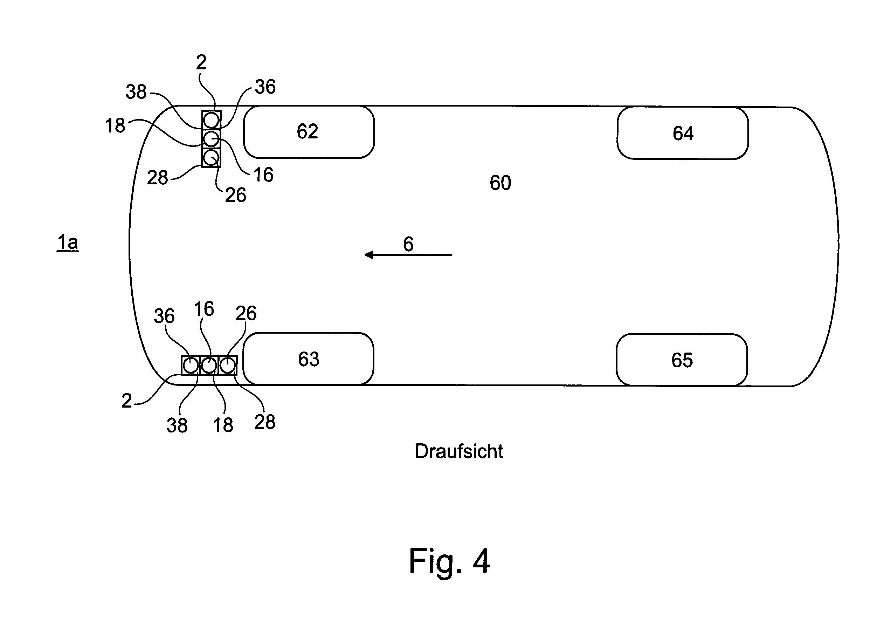

Die Figur 4 zeigt beispielhaft, wie der oben mit Bezug auf die Figuren 1 bis 3a beschriebene Sensor 2 in einem Fahrzeug 60 angeordnet werden kann. Genauso gut kann jedoch der mit Bezug auf die Figur 3b beschriebene Sensor 102 an gleichen oder ähnlichen Stellen des Fahrzeugs 60 angeordnet sein. In der Figur 4 ist eine schematische Draufsicht auf das Fahrzeug 60 von oben dargestellt. Das Fahrzeug 60 weist ein in Fahrtrichtung 6 linkes Vorderrad 63, ein in Fahrtrichtung rechtes Vorderrad 62 und entsprechende Hinterräder 64, 65 auf, wobei sich die Angaben rechts, links, vorne und hinten auf die normale Fahrtrichtung 6 des Fahrzeugs beziehen. In Fahrtrichtung 6 vor dem rechten Vorderrad 62 ist ein Sensor 2 quer zur Fahrtrichtung 6 ausgerichtet angeordnet. Der Sensor 2 ist so angeordnet, dass die Lichtemitteröffnung 18 mit der Emitteroptik 16, die erste Detektoröffnung 28 mit der ersten Sammeloptik 26 und die zweite Detektoröffnung 38 mit der zweiten Sammeloptik 36 von der Fahrbahn 1 aus sichtbar sind und im Wesentlichen in einer Reihe quer zur Fahrtrichtung 6 angeordnet sind.

Vor dem in Fahrtrichtung 6 linken Vorderrad 63 ist ebenfalls ein Sensor 2 angeordnet, wobei der Sensor 2 hier entlang der mit einem Pfeil 6 gekennzeichneten Fahrtrichtung 6 des Fahrzeugs 60 angeordnet ist. Dabei kann der Sensor 2 so angeordnet werden, dass die zweite Detektoröffnung 38 mit der zweiten Sammeloptik 36 in Fahrtrichtung 6 vor der Lichtemitteröffnung 18 mit der Emitteroptik 16 und der ersten Detektoröffnung 28 mit der ersten Sammeloptik 26 angeordnet ist, wie in der Figur 4 beispielhaft dargestellt.

Der Sensor 2 kann jedoch auch in jeder beliebigen anderen Ausrichtung angeordnet sein. In der Figur 4 sind zwei unterschiedliche Beispiele einer Anordnung eines Sensors 2 in einem Fahrzeug 60 angegeben, welche nicht notwendigerweise miteinander verbunden sein müssen. Beispielsweise kann vorgesehen sein, einen Sensor 2 in Fahrtrichtung 6 vor dem linken Vorderrad 63 und einen weiteren baugleichen Sensor 2 in Fahrtrichtung 6 vor dem rechten Vorderrad 62 vorzusehen, wobei beide Sensoren 2 quer oder entlang der Fahrtrichtung 6 oder in irgendeiner anderen Richtung ausgerichtet sind. Es kann auch vorgesehen sein, nur in Fahrtrichtung 6 vor dem linken Vorderrad 63 oder nur in Fahrtrichtung 6 vor dem rechten Vorderrad 62 einen Sensor 2 vorzusehen, wobei der Sensor 2 längs, quer oder in jeder anderen Richtung zur Fahrtrichtung 6 des Fahrzeugs 60 ausgerichtet sein kann.

Ein Sensor 2 kann auch an einer anderen Stelle am Fahrzeug 60 angeordnet sein, beispielsweise in Fahrtrichtung 6 vor dem linken Hinterrad 65 und/oder dem rechten Hinterrad 64 oder an einer anderen Stelle am Fahrzeug 60.

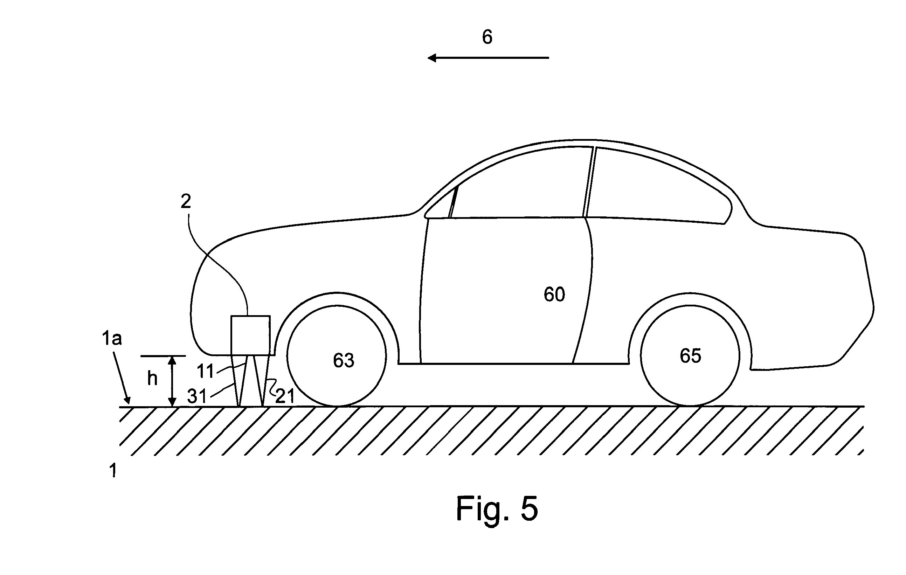

Figur 5 zeigt das mit dem Sensor 2, 102 ausgestatte Fahrzeug 60 der Figur 4 in einer Seitenansicht.

Der Sensor 2, 102 ist dazu ausgelegt, in einer Höhe h bzw. einem Abstand von ungefähr 10 cm bis ungefähr 1 m von der Fahrbahnoberfläche 1a angeordnet zu werden, wobei der Abstand an den jeweiligen Einsatzzweck angepasst sein kann. Für die Verwendung des Sensors 2, 102 in einem Personenkraftwagen kann die Höhe h im Bereich von ungefähr 10 cm bis 40 cm liegen. Bei einer Verwendung des Sensors 2, 102 in einem Nutzfahrzeug kann die Höhe h ungefähr 30 cm bis ungefähr 100 cm betragen, insbesondere in einem Bereich von 50 cm bis 80 cm.

In der vorangehenden Beschreibung beziehen sich die Begriffe vor, hinter, recht und links auf die normale Fahrtrichtung 6 des Fahrzeugs 60.

Die vorangehende Beschreibung wurde im Hinblick auf die in den Figuren 1 bis 5 dargestellte Beispiel gegeben. Jedoch wird der Fachmann das angegebene Beispiel ohne weiteres modifizieren oder kombinieren und beispielsweise um weitere optische Modifikationen, beispielsweise weitere Wellenlängen, ergänzen, um weitere Fahrbahnzustände zu erkennen. Auch wird der Fachmann andere als die angegebenen Wellenlängen in Erwägung ziehen, um die Messergebnisse an unterschiedliche Anforderungen anzupassen.

Es versteht sich, dass die angegebenen Wellenlängen nicht auf genau diese Werte eingeschränkt sind, sondern einen Wellenlängenbereich umfassen können, welcher die angegebenen diskreten Wellenlängen enthält.

## Patentansprüche

1. Sensor (2) zur Ermittlung einer Beschaffenheit einer Fahrbahnoberfläche (1a) für ein Kraftfahrzeug (60), umfassend
- zumindest eine Lichtquelleneinheit (12), welche dazu ausgelegt ist, Licht in zumindest zwei voneinander verschiedenen Wellenlängen auszusenden;
- einen ersten Detektor (22) zum Erfassen von diffus reflektiertem Licht der zumindest zwei voneinander verschiedenen Wellenlängen, wobei ein erster Polarisator (24) mit einer ersten Polarisationsrichtung an dem ersten Detektor (22) angeordnet ist; und
- einen zweiten Detektor (32) zum Erfassen von reflektiertem Licht der zumindest zwei voneinander verschiedenen Wellenlängen,
wobei vor der Lichtquelleneinheit (12) ein Lichtquellenpolarisator (14) und/oder vor dem zweiten Detektor (32) ein zweiter Polarisator (34) angeordnet ist, deren Polarisationsrichtungen im Wesentlichen senkrecht zu der ersten Polarisationsrichtung des ersten Polarisators (24) ausgerichtet sind, und wobei die zumindest eine Lichtquelleneinheit (12), der erste Detektor (22) und der zweite Detektor (32) in einem gemeinsamen Gehäuse (4), unmittelbar nebeneinander angeordnet sind.

2. Sensor (2) nach Anspruch 1, wobei die zumindest eine Lichtquelleneinheit (12) zwischen dem ersten Detektor (22) und dem zweiten Detektor (32) angeordnet ist.

3. Sensor (2) nach Anspruch 1 oder 2, wobei die zumindest eine Lichtquelleneinheit (12), der erste Detektor (22) und der zweite Detektor (23) so in dem Gehäuse (4) angeordnet sind, dass jeder von der zumindest einen Lichtquelleneinheit (12) emittierte Lichtstrahl (11) im Wesentlichen parallel zu einem auf den ersten Detektor (22) einfallenden ersten Lichtstrahl (21) und einem auf den zweiten Detektor (32) einfallenden zweiten Lichtstrahl (31) ist.

4. Sensor (2) nach einem der vorangehenden Ansprüche, wobei der erste Detektor (22) und/oder der zweite Detektor (32) zumindest eine Photodiode umfassen.

5. Sensor (2) nach einem der vorangehenden Ansprüche, wobei der erste Detektor (22) zur Detektion mehrerer, insbesondere aller der zumindest zwei voneinander verschiedenen Wellenlängen ausgelegt ist.

6. Sensor (2) nach einem der vorangehenden Ansprüche, wobei die Lichtquelleneinheit (12) drei Lichtquellen für Licht drei verschiedener Wellenlängen aufweist.

7. Sensor (2) nach Anspruch 6, **dadurch kennzeichnet, dass** die drei Lichtquellen zur Ermittlung sowohl von Wasser und Eis als auch zur Ermittlung der Beschaffenheit/Rauhigkeit der Fahrbahnoberfläche (1 a) verwendbar sind.

8. Sensor (2) nach einem der vorangehenden Ansprüche, welcher den ersten Detektor (22) und den zweiten Detektor (32) als einzige Detektoren aufweist, wobei der Sensor (2) zur Ermittlung sowohl von Wasser und Eis auf der Fahrbahnoberfläche (1 a) als auch zur Ermittlung der Art der Fahrbahnoberfläche (1a) geeignet ist.

9. Sensor (2) nach einem der vorangehenden Ansprüche, wobei der Sensor (2) dazu ausgelegt ist, in einer Höhe (h) von ungefähr 10 cm bis 100 cm über der Fahrbahnoberfläche (1 a) angeordnet zu werden.

10. Sensor (2) nach einem der vorangehenden Ansprüche, zudem umfassend eine Auswerteinrichtung (50) zur Auswertung von mittels des ersten Detektors (22) und zumindest mittels des zweiten Detektors (32) ermittelten Daten.

11. Sensor (2) nach Anspruch 10, wobei die Auswerteinrichtung (50) in dem Gehäuse (4) angeordnet ist.

12. Verwendung eines Sensors (2) nach einem der vorangehenden Ansprüche in einem Fahrzeug (60), wobei der Sensor (2) in Fahrtrichtung (6) vor einem Rad (62, 63, 64, 65) in dessen Spur an dem Fahrzeug (60) angeordnet ist.

13. Verwendung eines Sensors (2) nach einem der vorangehenden Ansprüche in einem Fahrzeug (60), wobei der Sensor (2) in einem Abstand (h) von 10 cm bis 100 cm von einer Fahrbahnoberfläche (1 a) angeordnet ist.
